# EUROPEAN PATENT SPECIFICATION

(11) **EP 3 386 315 B1**
(45) Date of publication and mention of the grant of the patent: **04.09.2019**
(21) Application number: 16798121.6
(22) Date of filing: 14.11.2016
(51) Int. Cl.: A23G 9/32, A23G 9/34, A23G 9/52

(54) **HEALTHY FROZEN CONFECTION MIX**
GESUNDE EISKONFEKTMISCHUNG
MÉLANGE DE CONFISERIE CONGELÉ SAIN

(30) Priority: 09.12.2015 EP 15198667
(43) Date of publication of application: 17.10.2018
(73) Proprietor: Société des Produits Nestlé S.A., 1800 Vevey (CH)
(72) Inventor: CHADJICHRISTOS, Sigrid, 60340 Villers sous Saint Leu (FR); JUNG, Jin-Mi, 60000 Beauvais (FR); DE MAUROY, Maylis, 78700 Conflans-Sainte-Honorine (FR)
(74) Representative: Elleby, Gudrun
(86) International application number: PCT/EP2016/077589
(87) International publication number: WO 2017/097542

(56) References cited:
- EP-A1- 1 570 746
- EP-A1- 1 597 976
- EP-A1- 1 673 980
- EP-A1- 1 925 210
- EP-A1- 1 982 601
- EP-A1- 2 756 762
- EP-A2- 1 967 077
- WO-A1-03/020048
- WO-A1-2008/003122
- WO-A1-2011/069224
- WO-A1-2015/091197
- US-A1- 2006 141 103

## Description

### Field of Invention

The present invention relates to a mix composition for frozen confection, in particular to a mix composition for frozen confection reduced in fat, saturated fatty acid, and added sugar, with preserved organoleptic properties. The invention also relates to a method for producing said frozen confection mix composition, and to the use of said mix composition in ice cream manufacturing.

### Background of Invention

Ice cream and other frozen confections are treats highly appreciated by consumers. Texture and nutritional profile are key criteria driving the consumers' preference. With the increasing concern for health and wellness there is a wish to reducing calories, sugars and saturated fatty acids (SFA) also in frozen confections.

Fat and sugar reduced frozen confectioneries are well known. In order to reduce the fat and SFA content, one could simply reduce the fat proportion in the mix composition of the frozen novelty or use a fat blend with a reduced content in SFA. Sugar reduction could be achieve by substituting sugar with other low molecular weight molecules, and balance the sweetness perception loss by adding high intensity sweeteners. However these solutions are not satisfactory because fat reduction has a negative impact on the mix composition, and sugar reduction increases the hard and icy mouthfeel.

Fat reduction has a negative impact on the mix composition, it is likely to decrease the stability of the final product and reduce the organoleptic properties. These negative effects on texture and shape retention can be addressed by adding stabilizers and emulsifiers to the mix. However, stabilizers and emulsifiers are usually expensive and they are sometimes perceived as artificial compounds by the consumers.

Sugar reduction increases the hard and icy mouthfeel while decreasing the sweetness of the frozen confection. Low molecular weight compounds and intense sweeteners that are used to in frozen confection to provide low sugar product are not supported by all consumers due to digestive discomfort etc. The low molecular weight compounds and intense sweeteners may furthermore be perceived as artificial compounds. Another known solution is the use of bulking agents such as fibers.

WO 2012/076641 (Nestec) teaches a frozen confection with hydrolysed whole grain. The whole grain may contain dietary fibres. The use of the hydrolysed whole grain provides an effect on the texture of the frozen confection. This application is silent about fat reduction.

WO 2008/125595 (Nestec) teaches ice confections with reduce sugar content. Said sugar reduction is achieved through a mixture of sugar containing fructose. Non digestible carbohydrates may be used as bulking agent. This application is silent about fat reduction.

WO 2011/069224 (Carella et al.) teaches gelato formulations which are sugar reduced, high in protein, and fibres enriched. The fibres may be non digestible oligosaccharides. This application discloses formulations with high contents of polyols.

Consumers are looking for healthier options of frozen confection but are not willing to compromise either on the quality (e.g. too many artificial additives) or on the indulgence (rich and pleasant mouthfeel).

Therefore there is a need for providing healthier mix compositions for frozen confectioneries, while maintaining the organoleptic experience and shape stability.

### Object of the invention

It is an object of the present invention to provide healthier mix compositions for frozen confections with reduced fat, saturated fatty acid and sugar contents, and providing organoleptic experiences equivalent to less healthy products.

Another object of the invention is to provide healthier mix compositions for frozen confections which have the same shape retention properties than less healthy products.

### Summary of the invention

The present invention provides healthier mix compositions for frozen confections with less than 190kcal per 100g, having a sensory profile similar to existing less healthy frozen confection mixes while maintaining the shape retention properties of the final product.

According to a first aspect the invention relates to frozen confection mix comprising
9 to 13,5 wt. % added sugar,
below 8,5 wt. % fat,
protein and emulsifier, and
   having a total solid content between 35% to 41,5%;
wherein the frozen confection mix has
   a protein to emulsifier ratio of 10 to 11 and comprises
   1 to 8 wt. % non-digestible fibers and
   wherein the frozen confectionery mix has
calories < 190kcal,
saturated fatty acids < 5,5 wt. %, and
mono and di saccharides < 19,5 wt. %.

Frozen confections made with the mix according to the invention have a smooth and creamy texture.

### Brief description of the figures

Figure 1 shows trial 1; sensory evaluation, example 18 (diamond) and example 19 (square) are plotted.
Figure 2 shows trial 1; total melt after 3 hours at room temperature, in % (vertical axis); example 18 (left) and 19 (right) .
Figure 3 shows trial 1; shape retention after 1 hour at room temperature; pictures of example 18 (left) and 19 (right) .
Figure 4 shows trial 1; sensory evaluation; examples 2 (diamond), 19 (square) and 34 (triangle) are plotted.
Figure 5 shows trial 1; total melt after 3 hours at room temperature, in % (vertical axis); example 19 (left), example 2 (middle) and 34 (right).
Figure 6 shows trial 1; shape retention after 30 minutes at room temperature; pictures of example 19 (left column), example 2 (middle column) and example 34 (right column) are displayed.
Figure 7 shows trial 2; sensory evaluation; example 20 (diamond) and example 22 (circle).
Figure 8 shows trial 2; total melt after 3 hours at room temperature, in % (vertical axis); example 20 (left) and example 22 (right) .
Figure 9 shows trial 2; shape retention after 30 minutes at room temperature; pictures of example 20 (upper row) and example 22 (lower row).
Figure 10 shows trial 2; sensory evaluation; example 5 (circle), example 22 (cross) and example 37 (triangle).
Figure 11 shows trial 2; total melt after 3 hours at room temperature, in % (vertical axis), example 22 (left), example 5 (middle) and example 37 (right).
Figure 12 shows trial 2; shape retention after 30 minutes at room temperature; pictures of example 22 (left column), example 5 (middle column) and example 37 (right column).
Figure 13 shows trial 2; sensory evaluation; example 3 (triangle) and example 6 (square) are plotted.
Figure 14 shows trial 2; sensory evaluation; example 20 (diamond) and example 23 (square).

### Detailed Description

It has surprisingly been found that the particular protein to emulsifier ratio of 10 to 11 allows a product with good shape retention properties and taste when combined with 1 to 8 wt. % non-digestible fibres. This is the case even for mixes which are reduced in fat, saturated fatty acid and sugar contents. A particular preferred protein to emulsifier ratio is 10,2 to 10,8, more preferably from 10,4 to 10,6.

It is known in the art that proteins may behave as emulsifier due to their chemical structure. However, in the present context, proteins are not included among emulsifier for the calculation of the protein to emulsifier ratio.
Protein sources, in the context of the present invention, may be dairy products, stabilizers, non digestible fibers, low DE glucose syrup.
In the present context the added sugars are mono and di saccharides, excluding lactose of dairy origin.

Further by Carbohydrate is meant: All saccharides and polysaccharides, thus including sugars, and lactose. This definition of carbohydrates does not include non digestible oligosaccharides, organic acids, alcohols and polyols.
In the present context by dietary fibers is meant: hydrocolloids, digestible polysaccharide. These dietary fibers may contain traces of non-digestible oligosaccharides. Furthermore, by non-digestible fibers is meant: a composition containing at least 60% (in dry mass) of non digestible oligosaccharide, soluble or insoluble, that escapes digestion in the small intestine of healthy persons and do not raise blood glucose levels. These non-digestible oligosaccharides are obtained for example through chemical (acid hydrolysis) or enzymatic treatment of polysaccharides. Further, in the present context healthier frozen confection is made from a frozen confection mix which is characterized by having calories < 190kcal, fat < 8,5 %, SFA < 5,5%, and mono and di saccharides < 19,5%.
Dairy fat in the present content can be made from milk products, including cream, butter, butterfat, or milk in one of its various forms: whole fluid milk, evaporated milk, skim milk, condensed milk, sweetened dried milk, or dried skim milk.

High intensity sweeteners are Glycyrrhizin and its acid derivatives, Monk fruit, Monatin, Steviol glycosides, Thaumatin, Acesulfame K, Alitame, Aspartame, Aspartame-Acesulfame Salt, Cyclamic acid and its salts, Neohesperidine dihydrochalcone , Neotame, Saccharin and its salts, Sucralose.

It is preferred that the frozen confection mix according to the invention does not contain, artificial or natural, high intensity sweeteners, and no added fructose or high fructose corn syrup.

Furthermore, it is preferred that the frozen confection mix does not contain, polyols or sugar alcohol, for example Gycerol, Maltitol, Xylitol, Sorbitol.

In the present context by emulsifier is meant a surfactant molecule that has the ability to form a stable emulsion.

Further in the present context unless otherwise indicated % of a component means the % of weight based on the weight of the composition, i.e. weight/weight %.

It has been found that it is possible to provide a healthier mix compositions for frozen confections without noticeably increasing the amount of stabilizers and emulsifiers. It has further been found that the present invention provides a healthier mix compositions for frozen confections which do not contain high intensity sweeteners.

In a preferred embodiment of the invention, the frozen confection mix comprises glucose syrup. Glucose syrup provides the benefits of balancing the total solids reduction due to sugar decrease. Furthermore, glucose syrups bind water more efficiently than small molecules (like sugars) and tend to give more body and texture to the final product.

It is furthermore preferred that the frozen confection mix comprises 10% to 13,5 wt. % of added sugar. This give a desirable sweetness to the product while keeping the added sugar content low and acceptable from a nutritional point of view.

In a particular preferred embodiment of the invention the frozen confection mix as described above further comprises non-digestible fibers being resistant dextrin. Non digestible fibers have the same benefits that glucose syrup in terms of total solids balance and texture improvement, without increasing the caloric content. Resistant dextrin are advantageous over other non-digestible oligosaccharides such as inulin for example, because they don't have laxative effects.
The following are preferred embodiments of frozen confection mixes:
A coconut oil based frozen confection mix according to the invention comprising 4 to 8 wt. % fat, preferably 4,5 to 6,5 wt. % fat, and comprising coconut oil. Preferably in this frozen confection mix the fat consist of coconut oil.

A dairy fat based frozen confection mix according to the invention comprising from 5% to below 8,5 wt.% fat, more preferably 5,5 to 8,1 wt. % fat, and wherein the fat consist of dairy fat.
A palm and coconut fat based frozen confection mix according to the invention comprising 4 to 8 wt. % fat, preferably 4,5 to 6,5 wt. % fat, and wherein the fat blend comprises coconut fat and palm oils. Preferably in this frozen confection mix the fat consist of coconut oil and palm oils.
Good shape retention properties may be obtained with a frozen confection mix according to the invention even with less than 0,6g of emulsifier and stabilizer, per 100g of mix.
The invention also relates to a frozen confection comprising a frozen confection mix as described in this document.
The invention also relates to a process of making a frozen confection mix, wherein the process comprising the following steps:
providing an frozen confection mix as discussed above,
blending the mix, heat treating blend to destroy pathogens,
homogenize blend to breakdown and stabilize fat globules,
optionally flavoring the blend to suit taste, and
cooling blend to allow aging and partial coalescence of the fat globules.

The invention also relates to a frozen confection obtained with this process.

### Experimental part

All masses are expressed in g per 100g of material. Energy values are expressed in Kcal per 100g of material.

### Materials

Carbohydrate sources:
- Sugar (Energy: 399,76 Kcal; water 0,06g; protein 0g; carbohydrates 99,94g; sugars 99,94g; ashes and mineral 0g; lactose 0g; total solids 99,94g).
- Glucose Syrup 37-40 DE (Energy: 314,4 Kcal; water 20,5g; protein 0,1g; carbohydrates 78,5g; sugars 22g; ashes and mineral 0,9g; lactose 0g; total solids 79,5g).
- Glucose Syrup 60 DE (Energy : 319,96 Kcal; water 20g; protein 0g; carbohydrates 79,9g; sugars 53g; ashes and mineral 0,01g; lactose 0g; total solids 80g).
- Glucose Syrup 92-97 DE (Energy: 295,6 Kcal; water 26g; protein 0g; carbohydrates 73,9g; sugars 72g; ashes and mineral 0,1g; lactose 0g; total solids 74g).
- Glucose Syrup 95-98 DE (Energy: 295,6 Kcal; water 26g; protein 0g; carbohydrates 73,9g; sugars 72g; ashes and mineral 0,1g; lactose 0g; total solids 74g).
- Dextrose Monohydrate Bag (Energy: 362 Kcal; water 9g; protein 0g; carbohydrates 90,5g; sugars 90,5g; ashes and mineral 0,05g; lactose 0g; total solids 91g).

Dairy compounds:
- Whey Sweet Powder (Energy: 359,92 Kcal; water 2,98g; protein 12,44g; fat 1,04g; SFA 0,6g; carbohydrates 74,45g; sugars 74,45g; ashes and mineral 8,09g; lactose 74,45g; total solids 97,02g).
- Milk Skimmed Powder MH Low Range 25kg (Energy: 357,72 Kcal; water 4g; protein 35,33g; fat 0,96g; SFA 0,64g; carbohydrates 51,94g; sugars 51,94g; ashes and mineral 7,77g; lactose 51,94g ; total solids 96g).

Stabilizer is a combination of about 45% Guar gum, about 45% Caroub gum and about 10% Carrageenan:
- Gum Guar Flour (Energy: 196,2Kcal; water 8g; protein 4,5g; fat 0,6g; SFA 0g; carbohydrates 0g; sugars 0g; ashes and mineral 0,5g; lactose 0g; total solids 92g; dietary fibers 86,4g).
- Gum Carob Flour (Energy: 197Kcal; water 10g; protein 6g; fat 1g; SFA 0g; carbohydrates 0g; sugars 0g; ashes and mineral 1g; lactose 0g; total solids 90g; dietary fibers 82g).
- Carrageenan (Energy: 156,3Kcal; water 8,7g; protein 1,2g; fat 0,3g; SFA 0g; carbohydrates 0g; sugars 0g; ashes and mineral 15,4g; lactose 0g; total solids 91,3g; dietary fibers 74,4g).

Fat sources:
- Coconut Fat (Energy: 900Kcal; water 0g; protein 0g; fat 100g; SFA 86g; Mono-unsaturated fatty acids 6,4g; Poly-unsaturated fatty acids 1,5g; carbohydrates 0g; ashes and mineral 0g; total solids 100g).
- Oil Blend Palm 60% Coconut 40% (Energy : 899,01Kcal; water 0,1g; protein 0g; fat 99,89g; SFA 64,2g; Mono-unsaturated fatty acids 23,1g; Poly-unsaturated fatty acids 6,3g; carbohydrates 0g; ashes and mineral 0,01g; total solids 99,9g).
- Cream 36% Fat Pasteurized (Energy: 342,4Kcal; water 59g; protein 2g; fat 36g; SFA 19,74g; carbohydrates 2,6g; sugars 2,6g; ashes and mineral 0,4g; lactose 2,6g; total solids 41g).
- Cream Fresh 30% Fat (Energy: 291,2Kcal; water 64,18g; protein 2,3g; fat 30g; SFA 18,6g; Mono-unsaturated fatty acids 7,5g; Poly-unsaturated fatty acids 0,6g; carbohydrates 3g; sugars 3g; ashes and mineral 0,52g; lactose 3g; total solids 35,82g).

Emulsifier:
- Mighty Soft (Energy: 890,88Kcal; water 1g; protein 0g; fat 98,98g; SFA 65,13g; Mono-unsaturated fatty acids 12,09g; Poly-unsaturated fatty acids 1,86g; carbohydrates 0g; organic acids (fatty acids excluded) 0,02g; ashes and mineral 0g; total solids 99g).

Non digestible Fibers:
- Resistant Dextrin Powder DE18-21 (Energy: 245,4Kcal; water 5,5g; protein 0,05g; fat 0g; non-digestible Oligosaccharides 66g; carbohydrates 28,3g; sugars 9,4g; ashes and mineral 0,05g; lactose 0g; total solids 94,5g).

Cocoa Powder
- Cocoa Powder 10-12% fat (Energy: 311,6Kcal; water 4g; protein 22g; fat 11g; SFA 6,8g; non-digestible Oligosaccharides 0g; carbohydrates 12,5g; sugars 1g; ashes and mineral 12g; lactose 0g; total solids 96g; dietary fibers 31,3g).
- Cocoa Powder 20-22% fat (Energy: 378,46Kcal; water 4g; protein 20g; fat 21g; SFA 12g; non-digestible Oligosaccharides 0g; carbohydrates 10,7g; sugars 1g; ashes and mineral 10,5g; lactose 0g; total solids 96g; dietary fibers 28,5g).

### Methods

### Ice cream processing

Conventional mix proceedings, homogenization and pasteurization were used, as well as freezing in a continuous freezer. The following ingredients were blended (water, carbohydrate sources, stabilizers, milk solids, fat sources), then the hydration of ice cream mix took place for about 20 min at about 60°C, then preheating to 72°C, the mixes were homogenized and then pasteurized using a continuous plate heat-exchanger (at about 85°C for about 30 seconds). Mixes were aged at least 4 hours, in chilled conditions (about +5°C). Each mix was frozen on a continuous freezer. An overrun of about 120% was provided, freezing temperature about -6°C. Each ice cream was then hardened in a ventilated hardening cell at -30°C to -40°C.

### Sensory Analysis

The tasting was done after a heat shock test as described herein.

The tasting panel consisted of twelve people who are trained for ice cream tasting. For each sensory attribute on texture and sweetness an intensity scale of 0 to 100 was used. Monadic profiles were obtained.
There were 2 limits of acceptance:
1) No more than 3 sensory attributes having a significant difference, according to the panel,
2) No sensory attributes with a difference of 10 points, or more, (on a 100 point scale) compared to the reference.
If one of these limits (or both) is reach, then the sample is not validated as similar to the reference.

Sensory attributes were as follow:
Hard (or Firm): Force required to vertically penetrate the spoon into the ice cream in the center of the ice cream mass. Penetrate the spoon vertically into the center of the ice cream mass up to 2/3 of the spoon. Apply the same force on every sample.
Elastic: Ability of the product to regain its shape after a deformation. After rating hardness, move the spoon horizontally forwards and backwards 3 times and evaluate the degree to which the mass comes back to its previous position.
Cold: Thermal perception at the contact of the ice cream with the tongue, teeth and palate. Evaluate the cold perception at the contact with the ice cream after 3 seconds and then spit out.
Compact: Perception of the compactness when compressing the sample between the tongue & palate. A sample with many & large air cells will be perceived as fluffy, not compact. A sample with a few and small air cells will be perceived as compact.
Melting rate: Evaluate the speed at which the ice cream becomes liquid when compressing the sample between tongue & palate (From slow to fast).
Smooth: Silky perception in the mouth generated by a product which is free from roughness, lumps, ridges, irregularities or particles (e.g. ice-crystals) when compressing the ice cream between the tongue and palate.
Chewy: Evaluate the resistance to bite, the effort required to prepare the sample for swallowing (i.e. the number of chews before swallowing).
Mouth coating: Describes the amount and persistence of the film coating the mouth and palate after swallowing or spitting. Evaluated on a bite of the décor.
Sweet (or sweet intensity): Intensity of the basic taste characterized by solutions of sucrose.
Overall flavor: Intensity of overall flavor remaining in mouth after swallowing.
Milky / Cream: Intensity of specific plain pasteurized milk flavor or cream flavor (not sour cream).
Vanillin: Intensity of specific vanillin flavor.
Flavor intensity: Intensity of the overall flavor (with inclusions if any).
Sweet length: Intensity of sweetness in mouth after swallowing.
Off-notes: Off-notes intensity.
Sticky: Evaluate the amount of ice cream which sticks to the spoon.
Vanilla bean: Intensity of the specific vanilla bean flavor.
Caramel: Intensity of the generic caramel flavor.
Aniseed: Intensity of the specific aniseed note.

### Heat shock resistance, melting profile and shrinkage.

### Heat shock test:

Heat shock stresses were applied to samples over 7 days and each heat shock cycle lasted for 24 hours with temperature variations of between -20 °C to -8 °C.
Heat Shocked: submitted to heat shock stresses.
Fresh: kept frozen, without T° stress after production, also noted: T0

### Drip test (or melting test):

Drip test measure the Melting behavior of ice cream samples placed on a mesh in a closed device at about 22°C (room temperature). Sample weight is measured overtime.
Measure was performed on fresh and heat shocked samples.
Total melt %, shape retention and melting profile are used to evaluate ice cream stability. Shape retention is a qualitative measurement.
Limit of acceptance: Total melt after 3 hours at about 22°C is considered as significant if there is a difference with the reference higher than 15%.

### Shrinkage:

Shrinkage measures the specific weight of the fresh ice cream first and then of the sample after 4 to 6 cycles of heat shock treatment and evaluate the shrinkage index (loss of volume).
Limit of acceptance: no shrinkage is accepted.

### Nutritional data

Nutritional component such as: Fat, protein, solids, sugars, Saturated Fatty Acids, lactose, added sugars, and carbohydrates, are expressed in g per 100g of the ingredient or ice cream mix.
Regarding the ice cream mixes these nutritional component are calculated. All the ingredients containing said nutritional component are summed up, proportionally to their weight in the ice cream mix and to their content of said nutritional component.

By Solids is meant: Solid content of a raw material, all compounds except water.
By Sugars is meant: Mono and di saccharides.
By Total Lactose is meant: lactose coming from dairy product (for example skim milk, cream).
By Added Sugars is meant: mono and di saccharides minus the lactose coming from dairy products.
By Carbohydrate is meant: All saccharides and polysaccharides, thus including sugars, and lactose. This definition of carbohydrates does not include non digestible oligosaccharides, organic acids, alcohols and polyols.
By dietary fibers is meant: hydrocolloids, digestible polysaccharide. These dietary fibers may contain traces of non-digestible oligosaccharides.
By non-digestible fibers is meant: a composition containing at least 60% (in dry mass) of non digestible oligosaccharide, soluble or insoluble, that escapes digestion in the small intestine of healthy persons and do not raise blood glucose levels. These non-digestible oligosaccharides are obtained for example through chemical (acid hydrolysis) or enzymatic treatment of polysaccharides.

### Results

Recipes with 3 different types of fats have been tested: Coconut oil, Dairy fat, Coconut oil and Palm oil blend. For each type of fat 6 trials have been conducted. An additional seventh trial has been done for Coconut & Palm fat blend with cocoa powder.
For each Trial, a reference (standard level of sugar and fat) is described and several mixes according to the invention are disclosed. These mixes according to the invention are healthier than their respective reference, but have a similar sensory profile. Some non-working examples are also disclosed.

The references of trials 1, for each type of fat, have similar sensory profile. In other words, the sensory profiles of examples 1, 18 and 33 are similar.
*Mutatis mutandis* the same equivalence of sensory profiles of the references applies to the sets of trials 2, 3, 4, 5 and 6:
For trials 2, sensory profiles of examples 3, 20 and 33 are similar. For trials 3, sensory profiles of examples 7, 24 and 38 are similar. For trials 4, sensory profiles of examples 11, 27 and 41 are similar. For trials 5, sensory profiles of examples 13, 29 and 43 are similar. For trials 6, sensory profiles of examples 15, 31 and 45 are similar.
This feature is important because it allows sensory comparisons between samples made with different fats within the same sets of trials. In other words, according to the present invention, the sensory profiles of examples 2, 19 and 34 should be similar because they are both designed with respect to references which have similar sensory profiles (namely examples 1, 18 and 33).

In the following tables the amount of non-digestible fibers and the protein to emulsifier ratio are highlighted.

### Glossary:

Ex. means Example
Ref. means Reference
Inv. means Invention
NWE means Non working example

Materials are expressed in % of composition total weight, water is added to complete to 100%. Nutritional values are expressed in g per 100g of composition, or Kcal per 100g of composition.

### 1- Coconut fat

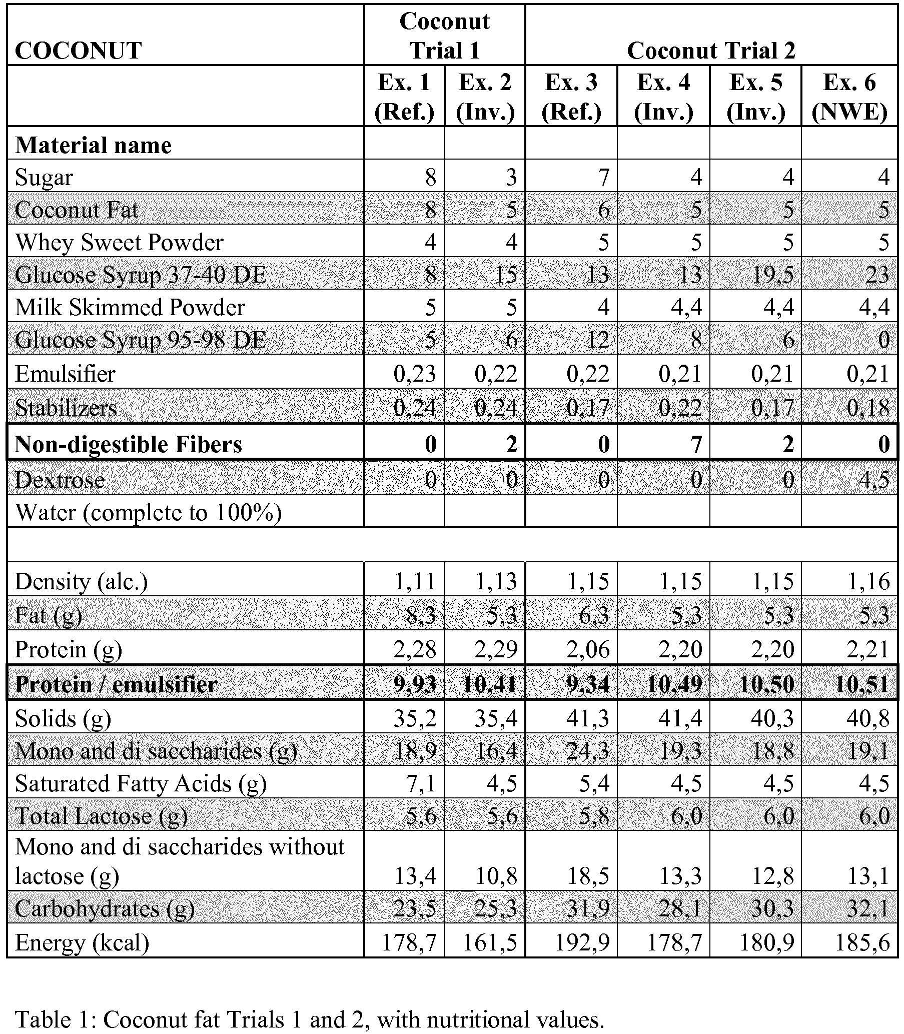

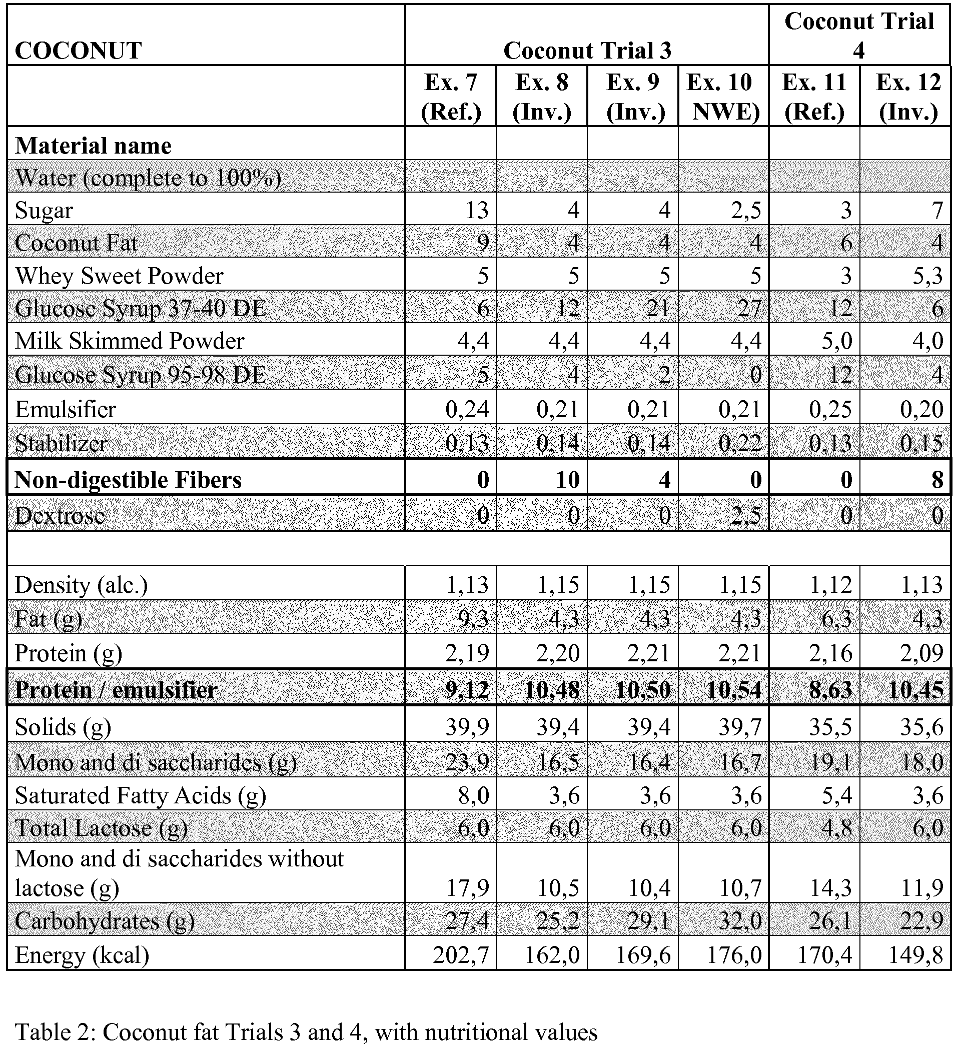

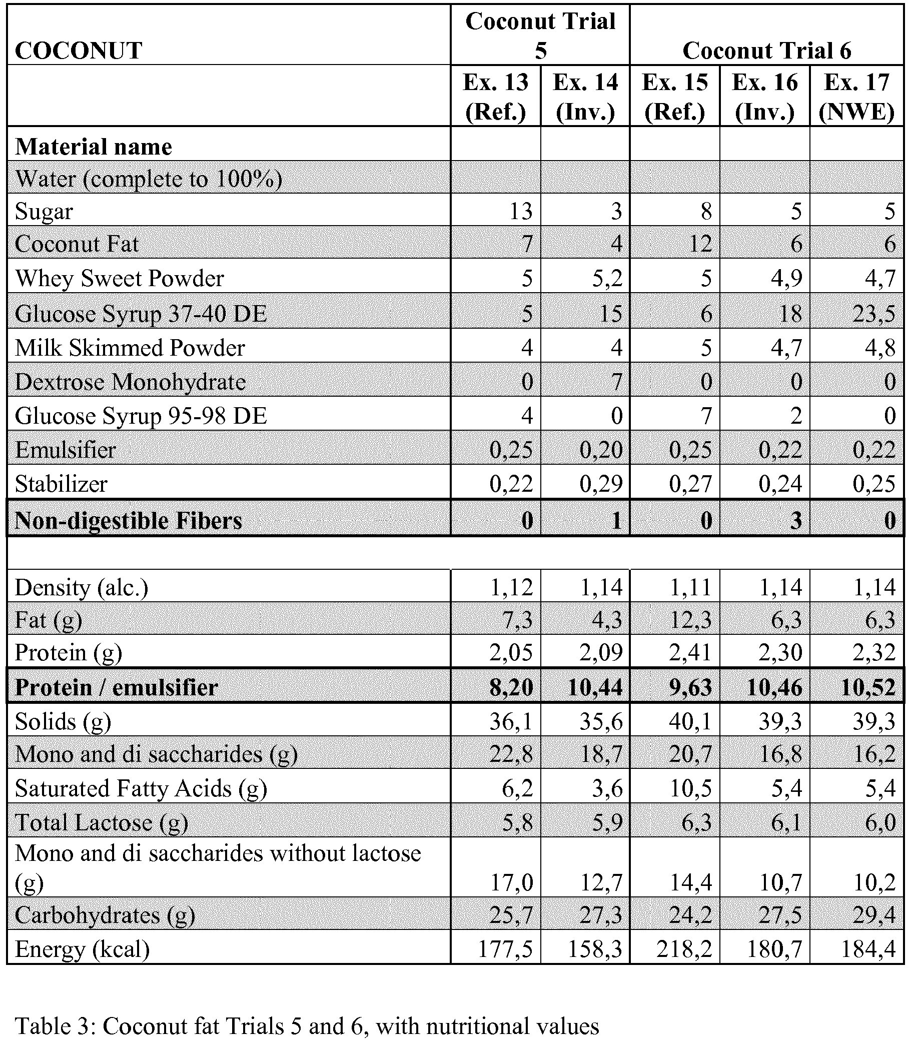

### 2- Dairy fat

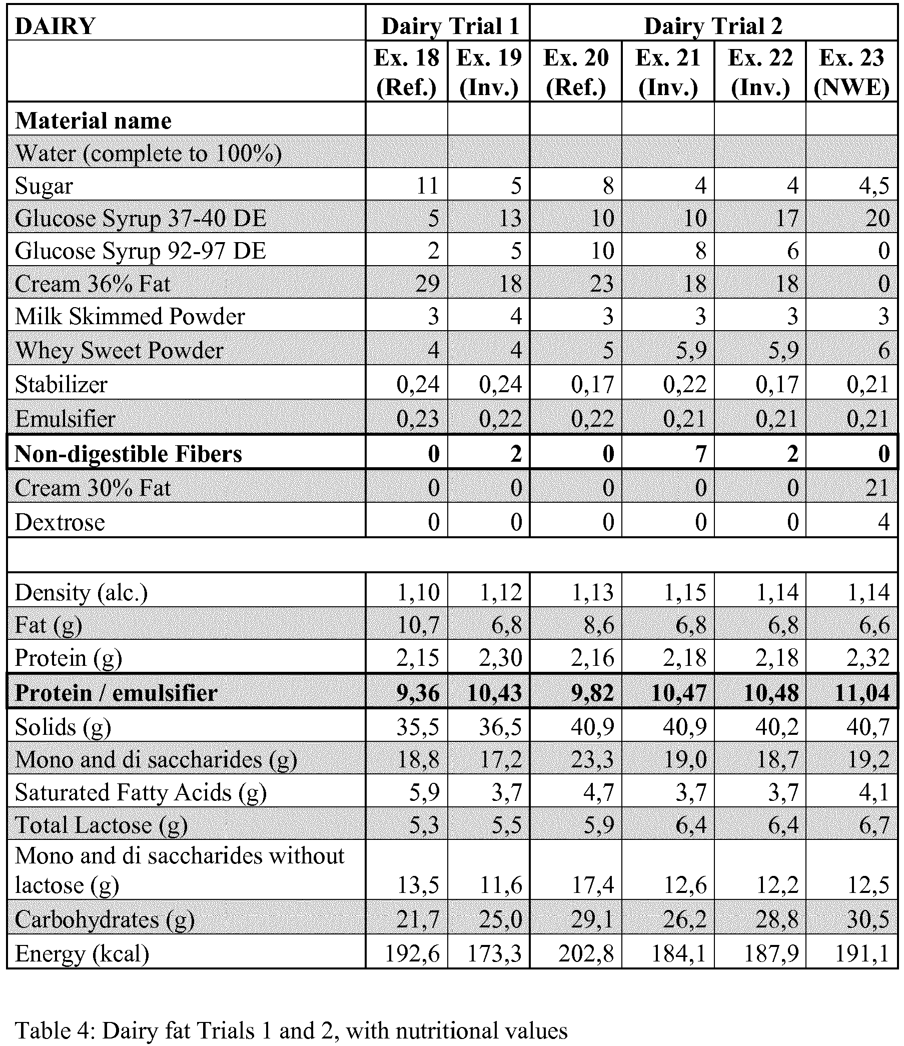

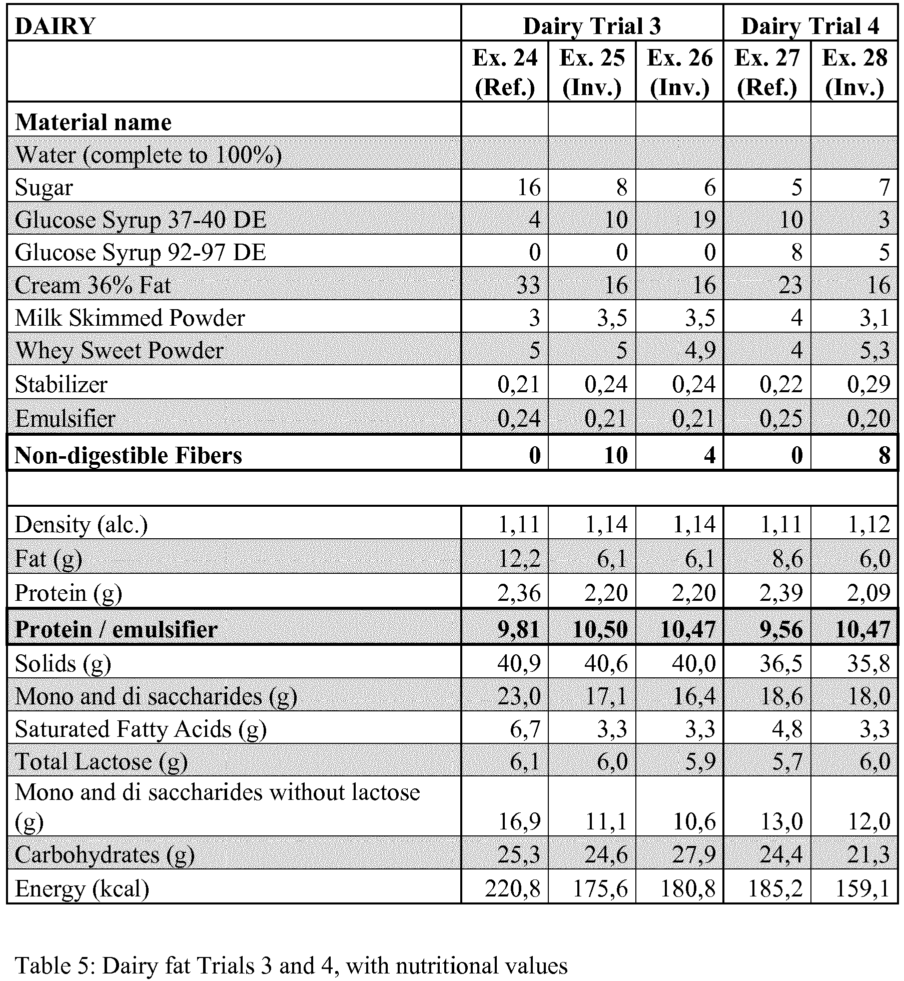

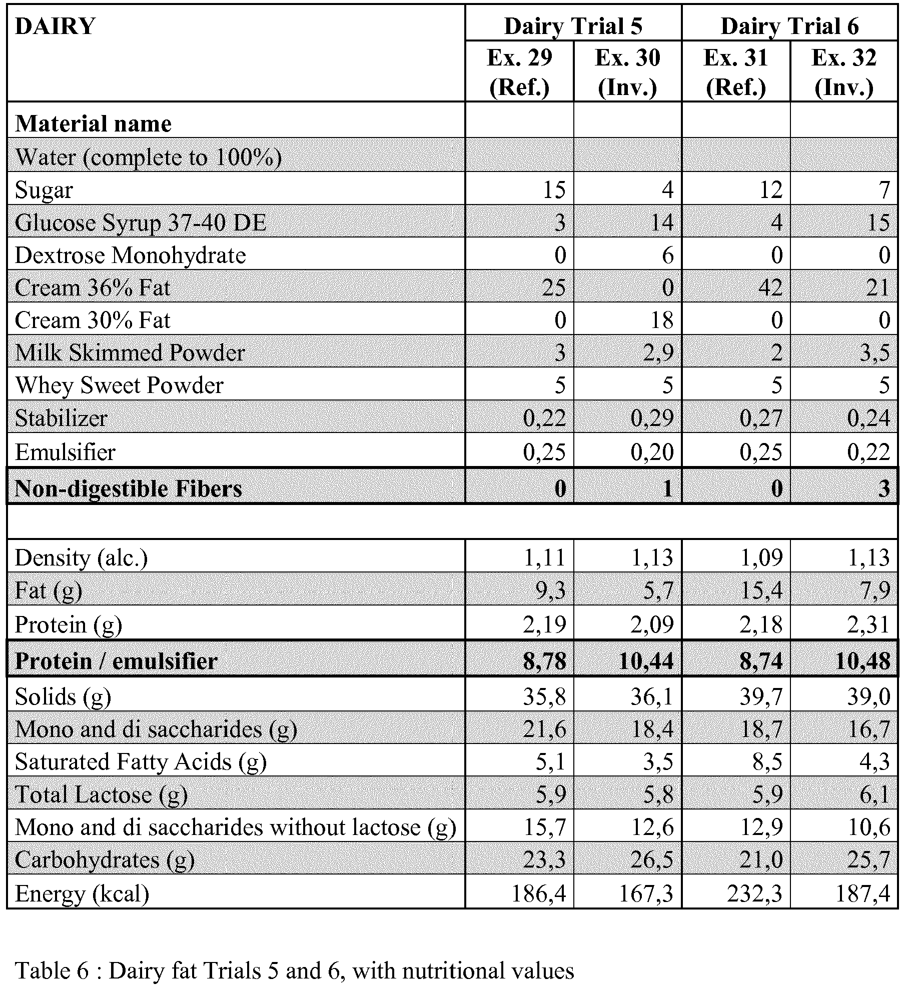

### 3- Coconut & Palm fats blend

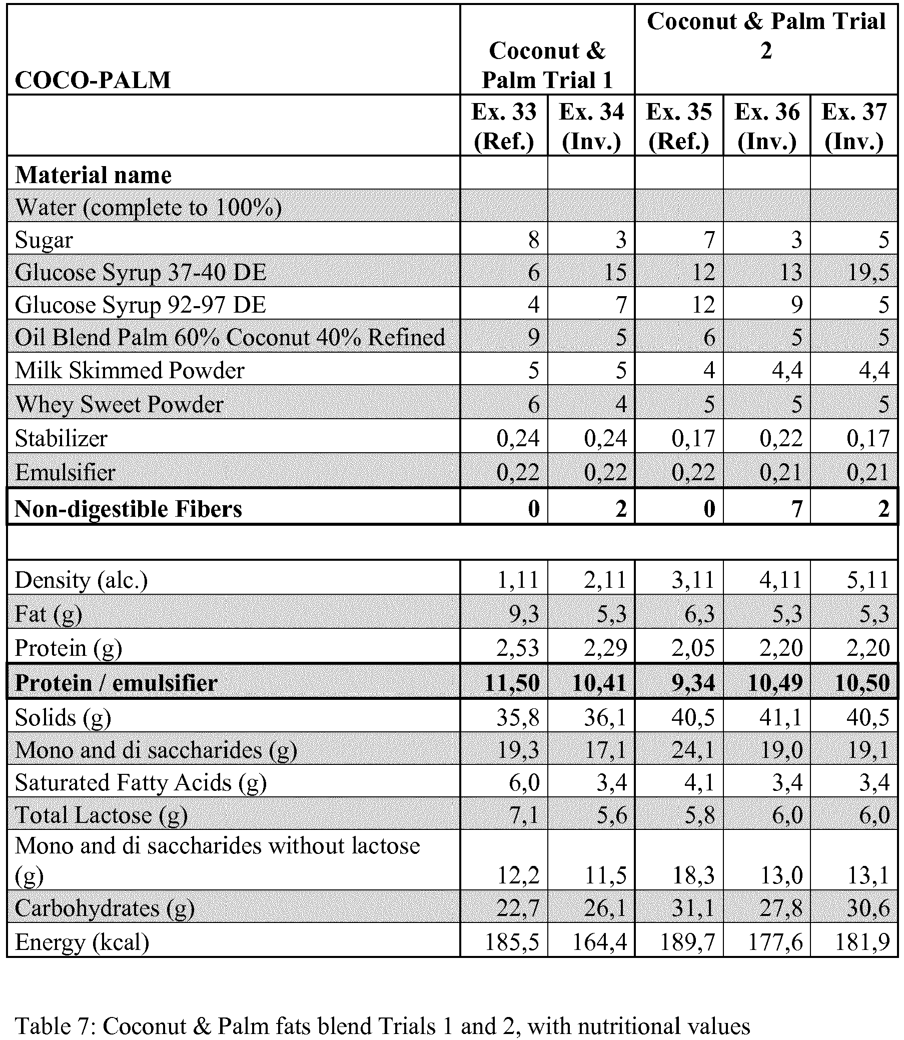

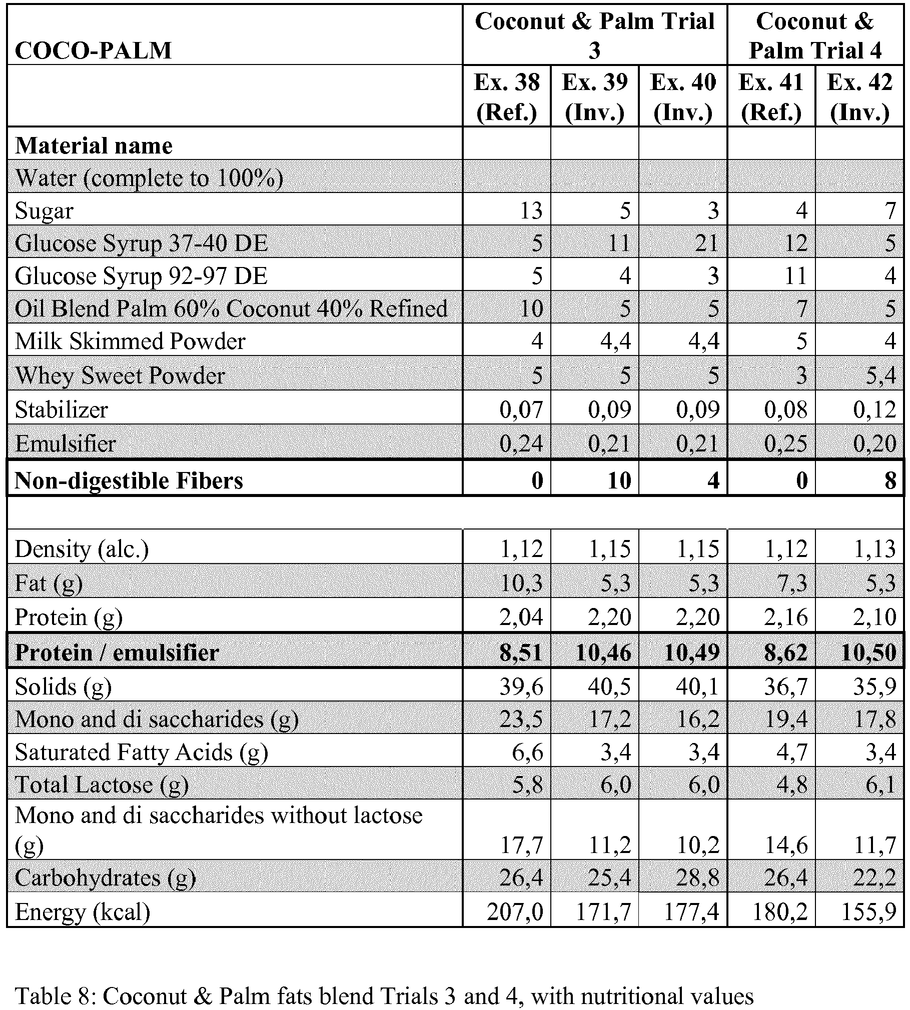

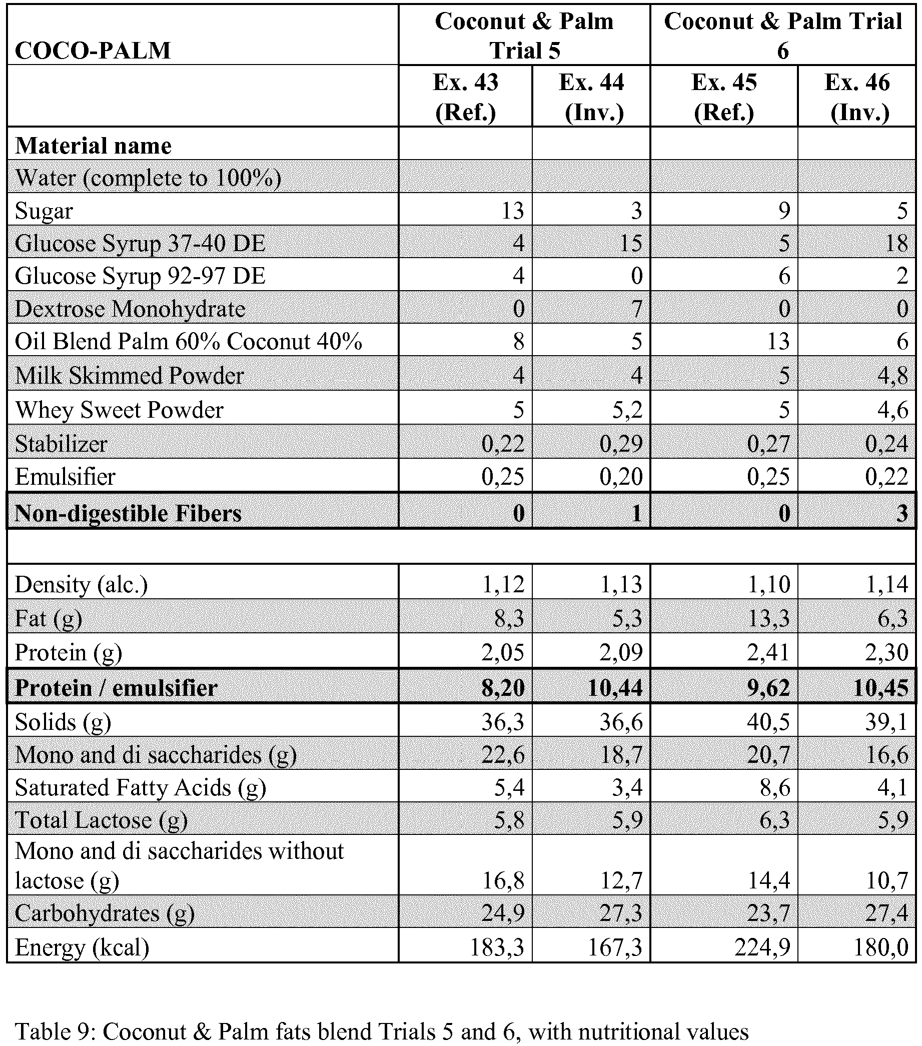

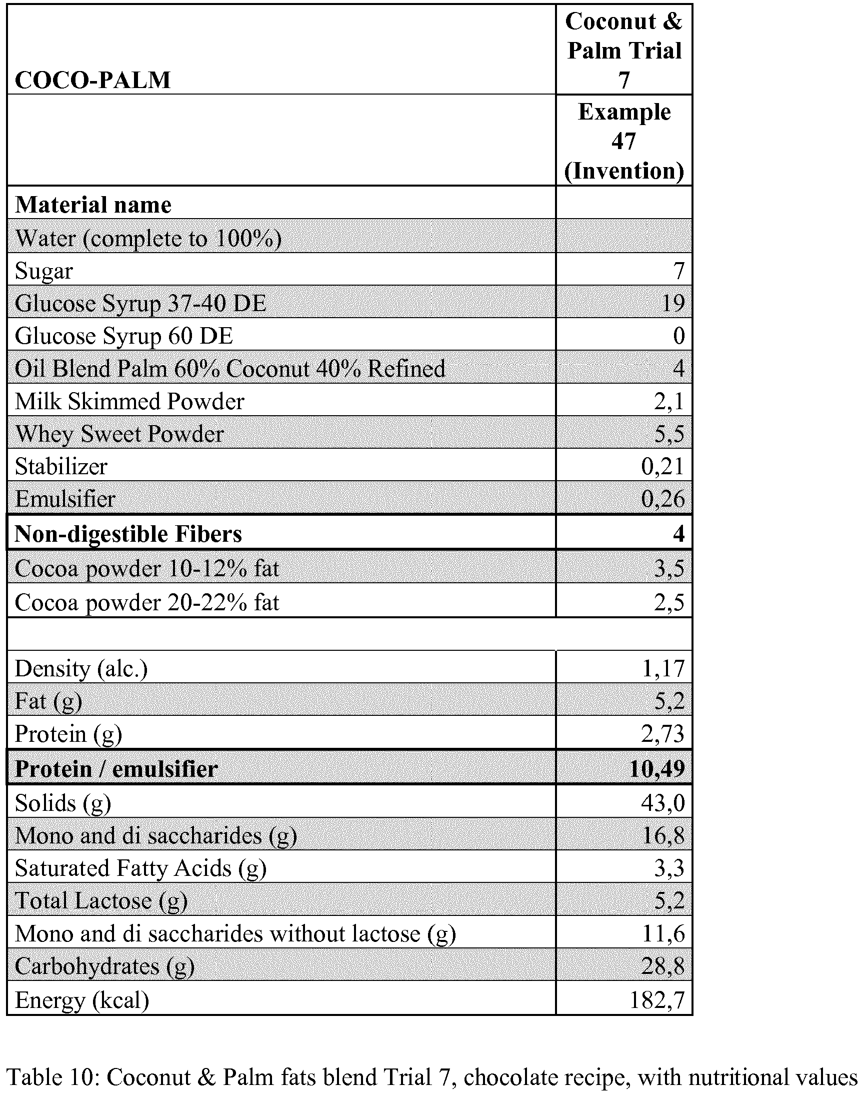

### Results:

For the sake of clarity results description will be focused on sets of trials number 1 and 2 for each type of fat. Similar results were obtained with other trial sets (3 to 7) and will not be further commented here.

### Trial 1 (Examples 2, 18, 19, 34)

### Example 19 (invention) versus example 18 (reference):

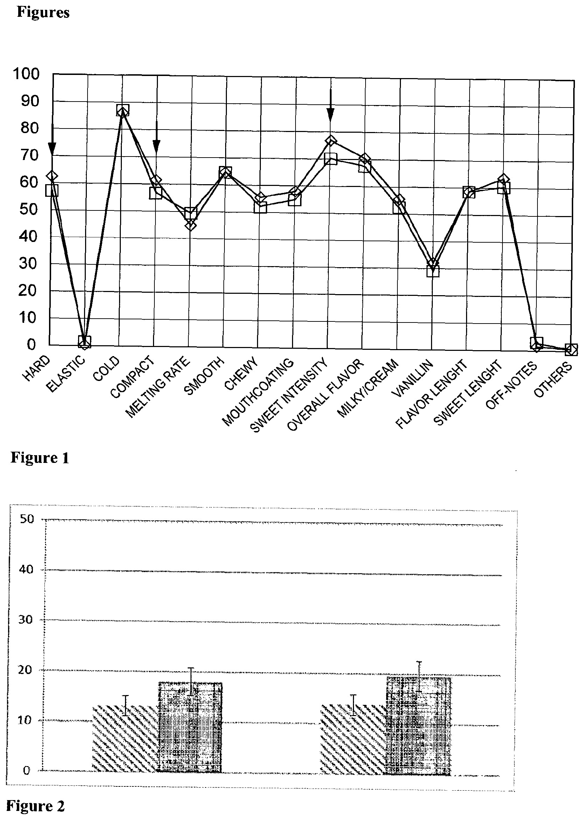

Sensory profile of Example 19 versus Example 18 is disclosed in figure 1.
Overall profiles are similar. 3 significant differences are observed: Hard, Compact and Sweet intensity. No difference over 10 points was observed.
No sensory measure was outside the acceptance limit, the 2 samples (examples 18 and 19) have similar sensory profiles.

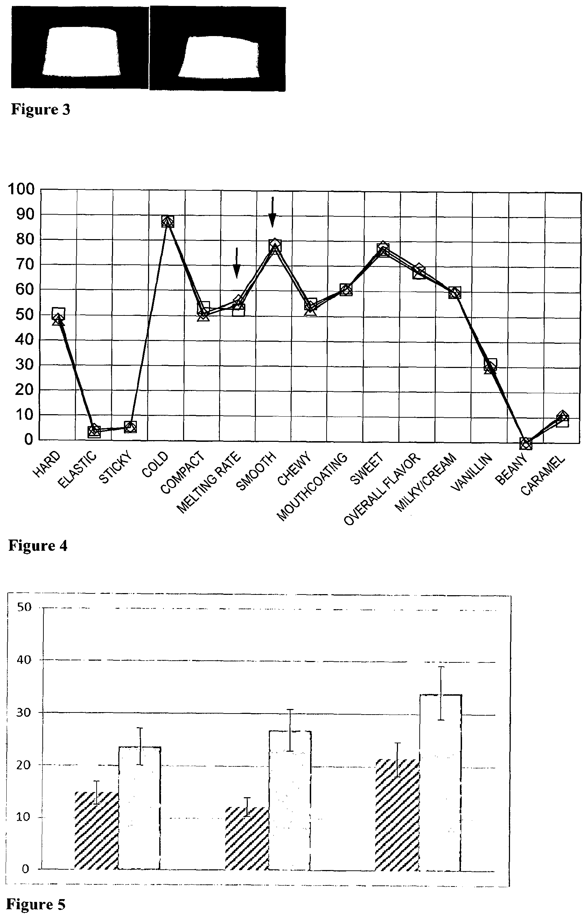

Total melt did not show any significant difference (see figure 2).
Shape retention did not show any significant difference (see figure 3).
No shrinkage was observed.
The 2 samples corresponding to examples 18 and 19 have similar stabilities.

### Example 2 (invention) versus example 19 (invention) versus example 34 (invention):

Sensory profile of Example 2, 19 and 34 are disclosed in figure 4.
Overall profiles are similar. 2 significant differences are observed: Smoothness and Melting rate. No difference over 10 points was observed.
No sensory measure was outside the acceptance limit, the 3 samples corresponding to examples 2, 19 and 34 have similar sensory profiles.

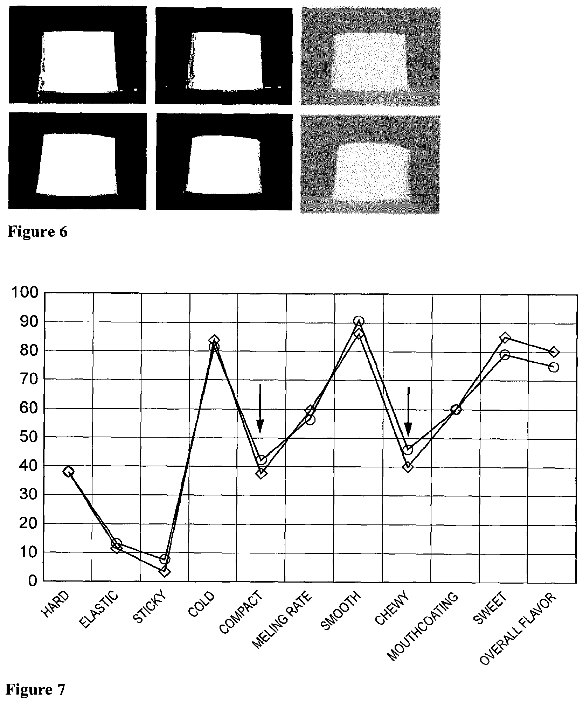

Example 34 show a total melt slightly above the one observed for examples 2 and 19; however it is not a significant difference (see figure 5).
Shape retention did not show any significant difference (See figure 6).
No shrinkage was observed.
The 3 samples corresponding to examples 2, 19 and 34 have similar stabilities.

### Trial 2 (Examples 5, 6, 20, 22, 23, 37)

### Example 22 (invention) versus example 20 (reference):

Sensory profile of Example 22 versus Example 20 (Reference) is disclosed in figure7.
Overall profiles are similar. 2 significant differences are observed: Compact and Chewy.
No difference over 10 points was observed.
The 2 samples corresponding to examples 22 and 20 have similar sensory profiles.

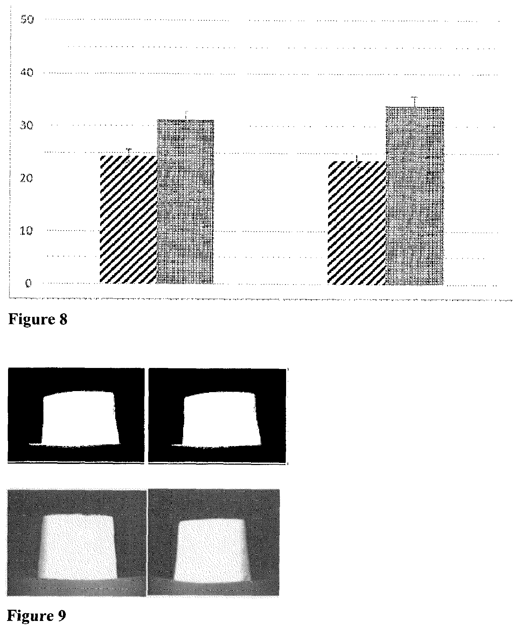

Total melt did not show any significant difference (see figure 8).
Shape retention did not show any significant difference (See figure 9).
No shrinkage was observed.
The 2 samples corresponding to examples 22 and 20 have similar stabilities.

### Example 5 (invention) versus example 22 (invention) versus example 37 (invention):

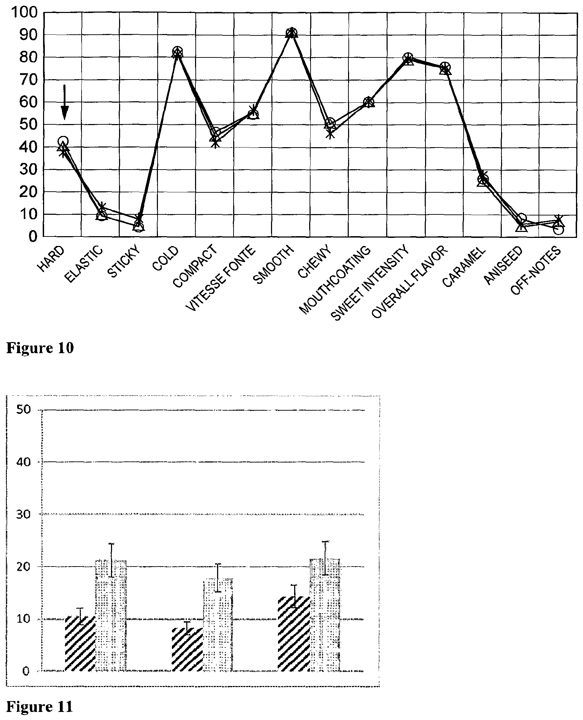

Sensory profile of Example 5, 22 and 37 are disclosed in figure 10.
Overall profiles are similar. 1 significant difference is observed: Hard. No difference over 10 points was observed.
The 3 samples corresponding to examples 5, 22 and 37 have similar sensory profiles.

### Total melt did not show any significant difference (see figure 11).

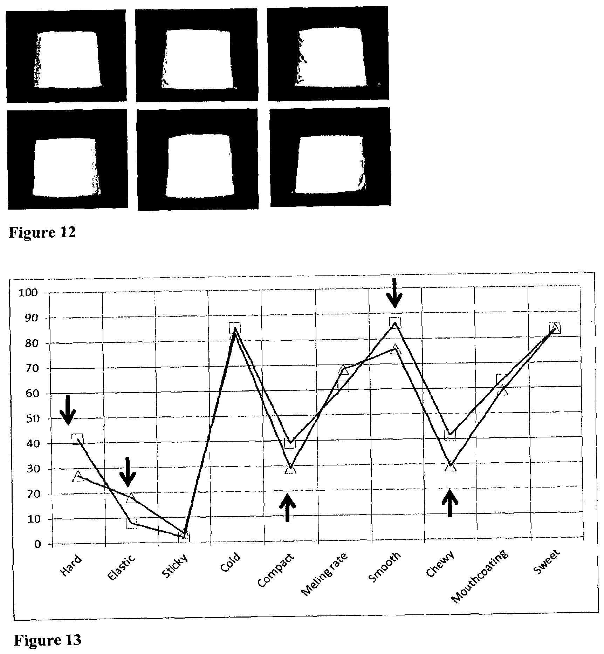

Shape retention did not show any significant difference (See figure 12).
No shrinkage was observed.
The 3 samples corresponding to examples 5, 22 and 37 have similar stabilities.

### Example 6 (non-working example):

This example does not contain non-digestible fibers.
Sensory profile of Examples 6 versus Example 3 (Reference) is disclosed in figure 13. Five attributes are significantly different to reference, and two attributes have a difference over 10 points; this is outside the acceptance limit: Hard (more than 10 point difference), Elastic, Compact, Smooth, Chewy (more than 10 point difference). Sensory profile is not similar to the reference; so example 6 is not in the scope of the present invention.
Moreover, shrinkage of the sample produced was observed.

### Example 23 (non-working example):

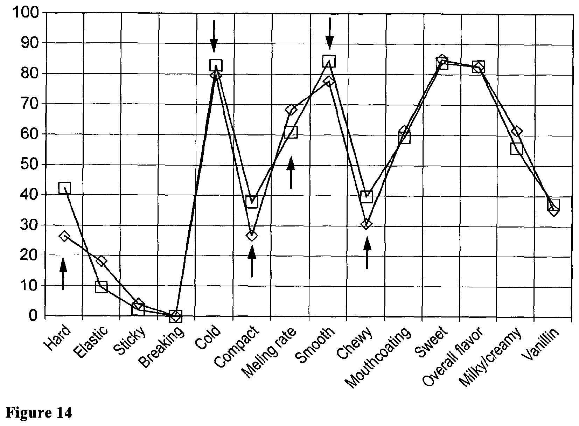

This example does not contain non-digestible fibers.
Sensory profile of Examples 23 versus Example 20 (Reference) is disclosed in figure 14.
Six attributes are significantly different to reference, and two attributes have a difference over 10 points; this is outside the acceptance limit: Hard (more than 10 point difference), Cold, Compact (more than 10 point difference), Melting rate, Smooth, Chewy.
Sensory profile is not similar to the reference; so example 6 is not in the scope of the present invention.
No shrinkage was observed.

Further details on the shown figures:
Figure 1; trial 1; sensory evaluation, example 18 (diamond) and example 19 (square) are plotted. Significant differences are pointed with an arrow.
Figure 2; trial 1; total melt after 3 hours at room temperature, in % (vertical axis); example 18 (left) and 19 (right) are plotted at T0 (hashed) and after heat shock (plain).
Figure 3; trial 1; shape retention after 1 hour at room temperature; pictures of example 18 (left) and 19 (right) are displayed; both samples have been heat shocked.
Figure 4; trial 1; sensory evaluation; examples 2 (diamond), 19 (square) and 34 (triangle) are plotted. Significant differences are pointed with an arrow.
Figure 5; trial 1; total melt after 3 hours at room temperature, in % (vertical axis); example 19 (left), example 2 (middle) and 34 (right), are plotted at T0 (hashed) and after heat shock (plain).
Figure 6; trial 1; shape retention after 30 minutes at room temperature; pictures of example 19 (left column), example 2 (middle column) and example 34 (right column) are displayed; at T0 (upper row) and after heat shock (lower row).
Figure 7; trial 2; sensory evaluation; example 20 (diamond) and example 22 (circle) are plotted. Significant differences are pointed with an arrow.
Figure 8; trial 2; total melt after 3 hours at room temperature, in % (vertical axis); example 20 (left) and example 22 (right) are plotted at T0 (hashed) and after heat shock (plain).
Figure 9; trial 2; shape retention after 30 minutes at room temperature; pictures of example 20 (upper row) and example 22 (lower row) are displayed, at T0 (left column) and after heat shock (right column).
Figure 10; trial 2; sensory evaluation; example 5 (circle), example 22 (cross) and example 37 (triangle) are plotted. Significant difference is pointed with an arrow.
Figure 11; trial 2; total melt after 3 hours at room temperature, in % (vertical axis), example 22 (left), example 5 (middle) and example 37 (right) are plotted at T0 (hashed) and after heat shock (plain).
Figure 12; trial 2; shape retention after 30 minutes at room temperature; pictures of example 22 (left column), example 5 (middle column) and example 37 (right column) are displayed at T0 (upper row) and after heat shock (lower row).
Figure 13; trial 2; sensory evaluation; example 3 (triangle) and example 6 (square) are plotted. Significant differences are pointed with an arrow.
Figure 14; trial 2; sensory evaluation; example 20 (diamond) and example 23 (square) are plotted. Significant differences are pointed with an arrow.

It should be understood that various changes and modifications to the presently preferred embodiments described herein will be apparent to those skilled in the art.

## Claims

1. A frozen confection mix comprising
9 to 13,5 wt. % added sugar,
below 8,5 wt. % fat,
protein and emulsifier (not including proteins), and having a total solid content between 35% to 41,5%;
wherein the frozen confection mix has
a protein to emulsifier ratio of 10 to 11 and comprises
1 to 8 wt. % non-digestible fibers and
wherein the frozen confectionery mix has
calories < 190kcal,
saturated fatty acids < 5,5 wt. %, and
mono and di saccharides < 19,5 wt. %.

2. A frozen confection mix according to claim 1, wherein the frozen confection mix comprises a protein to emulsifier ratio of 10,2 to 10,8, preferably from 10,4 to 10,6.

3. A frozen confection mix according to any of the preceding claims, wherein the mix comprises glucose syrup.

4. A frozen confection mix according to any of the preceding claims comprising 10% to 13,5 wt. % of added sugar.

5. A frozen confection mix according to any of the preceding claims, wherein the non-digestible fibers are resistant dextrin.

6. A frozen confection mix according to any of the preceding claims comprising 4 to 8 wt. % fat, preferably 4,5% to 6,5 wt. % fat, and wherein the fat comprises coconut oil.

7. A frozen confection mix according to any of claims 1 to 5, wherein the frozen confection mix comprises
from 5 to below 8,5 wt. % fat, preferably 5,5 to 8,1 wt. % fat, and wherein the fat consist of dairy fat.

8. A frozen confection mix according to any of claims 1 to 5, wherein the frozen confection mix comprises 4 to 8 wt. % fat, preferably 4,5 to 6,5 wt. % fat, and wherein the fat blend comprises coconut fat and palm oils.

9. A frozen confection mix according to any of claims 1 to 8, wherein the frozen confection mix does not contain, artificial or natural, high intensity sweeteners, and no added fructose or high fructose corn syrup.

10. A frozen confection mix according to any of claims 1 to 9, wherein the frozen confection mix does not contain, polyols or sugar alcohol, for example glycerol, Maltitol, Xylitol, Sorbitol.

11. A frozen confection mix according to any of claims 1 to 10, wherein the frozen confection mix contain less than 0,6g of emulsifier and stabilizer, per 100g of mix.

12. Process of making a frozen confection mix, wherein the process comprising the following steps:
providing an frozen confection mix according to any of claims 1 to 11,
blending the mix, heat treating blend to destroy pathogens,
homogenize blend to breakdown and stabilize fat globules,
optionally flavoring the blend to suit taste, and
cooling blend to allow aging and partial coalescence of the fat globules.

13. A frozen confection comprising a frozen confection mix according to any of claims 1 to 11.

## Patentansprüche

1. Gefrorenes Konfektgemisch, das Folgendes umfasst:
zu 9 bis 13,5 Gew.-% zugesetzten Zucker,
zu weniger als 8,5 Gew.-% Fett,
Protein und Emulgator (nicht einschließlich Proteine), und einen Gesamtfeststoffgehalt zwischen 35 % bis 41,5 %;
wobei das gefrorene Konfektgemisch
ein Verhältnis von Protein zu Emulgator von 10 zu 11 aufweist und
zu 1 bis 8 Gew.-% unverdauliche Fasern umfasst und
wobei das gefrorene Konfektgemisch
Kalorien < 190 kcal,
gesättigte Fettsäuren < 5,5 Gew.-% und
Mono- und Disaccharide < 19,5 Gew.-% aufweist.

2. Gefrorenes Konfektgemisch nach Anspruch 1, wobei das gefrorene Konfektgemisch ein Verhältnis von Protein zu Emulgator von 10,2 zu 10,8, vorzugsweise von 10,4 zu 10,6, umfasst.

3. Gefrorenes Konfektgemisch nach einem der vorstehenden Ansprüche, wobei das Gemisch Glukosesirup umfasst.

4. Gefrorenes Konfektionsgemisch nach einem der vorstehenden Ansprüche, das zu 10 Gew.-% bis 13,5 Gew.-% zugesetzten Zucker umfasst.

5. Gefrorenes Konfektgemisch nach einem der vorstehenden Ansprüche, wobei es sich bei den unverdaulichen Fasern um resistentes Dextrin handelt.

6. Gefrorenes Konfektgemisch nach einem der vorstehenden Ansprüche, das zu 4 bis 8 Gew.-%, vorzugsweise zu 4,5 Gew.-% bis 6,5 Gew.-%, Fett umfasst und wobei das Fett Kokosnussöl umfasst.

7. Gefrorenes Konfektgemisch nach einem der Ansprüche 1 bis 5, wobei das gefrorene Konfektgemisch zu 5 bis weniger als 8,5 Gew.-%, vorzugsweise zu 5,5 bis 8,1 Gew.-%, Fett umfasst und wobei das Fett aus Milchfett besteht.

8. Gefrorenes Konfektgemisch nach einem der Ansprüche 1 bis 5, wobei das gefrorene Konfektgemisch zu 4 bis 8 Gew.-%, vorzugsweise zu 4,5 bis 6,5 Gew.-%, Fett umfasst und wobei die Fettmischung Kokosfett und Palmöle umfasst.

9. Gefrorenes Konfektgemisch nach einem der Ansprüche 1 bis 8, wobei das gefrorene Konfektgemisch keine künstlichen oder natürlichen hochintensiven Süßungsmittel und keinen zugesetzten Fruchtzucker oder Maissirup mit hohem Fruchtzuckergehalt enthält.

10. Gefrorenes Konfektgemisch nach einem der Ansprüche 1 bis 9, wobei das gefrorene Konfektgemisch keine Polyole oder Zuckeralkohol, beispielsweise Glycerin, Maltit, Xylit, Sorbit, enthält.

11. Gefrorenes Konfektgemisch nach einem der Ansprüche 1 bis 10, wobei das gefrorene Konfektgemisch weniger als 0,6 g an Emulgator und Stabilisator pro 100 g des Gemischs enthält.

12. Verfahren zum Herstellen eines gefrorenen Konfektgemischs, wobei das Verfahren die folgenden Schritte umfasst:
das Bereitstellen eines gefrorenen Konfektgemischs nach einem der Ansprüche 1 bis 11,
das Mischen des Gemischs, die Wärmebehandlung des Gemischs, um Pathogene zu zerstören,
das Homogenisieren des Gemischs, um Fettkügelchen aufzubrechen und zu stabilisieren,
gegebenenfalls das Aromatisieren des Gemischs, um dem Geschmack zu entsprechen, und
das Abkühlen des Gemischs, um Alterung und partielles Verschmelzen der Fettkügelchen zu ermöglichen.

13. Gefrorenes Konfekt, das ein gefrorenes Konfektgemisch nach einem der Ansprüche 1 bis 11 umfasst.

## Revendications

1. Mélange de confiserie congelé comprenant
9 à 13,5 % en poids de sucre ajouté,
moins de 8,5 % en poids de matière grasse,
une protéine et un émulsifiant (n'incluant pas de protéines), et ayant une teneur totale en solides entre 35 % et 41,5 % ;
le mélange de confiserie congelé ayant
un rapport protéine sur émulsifiant de 10 à 11 et comprenant
1 à 8 % en poids de fibres non digestibles et
le mélange de confiserie congelé ayant
des calories < 190 kcal,
des acides gras saturés < 5,5 % en poids, et
des mono et disaccharides < 19,5 % en poids.

2. Mélange de confiserie congelé selon la revendication 1, le mélange de confiserie congelé comprenant un rapport protéine sur émulsifiant de 10,2 à 10,8, de préférence de 10,4 à 10,6.

3. Mélange de confiserie congelé selon une quelconque des revendications précédentes, le mélange comprenant du sirop de glucose.

4. Mélange de confiserie congelé selon une quelconque des revendications précédentes comprenant
10 % à 13,5 % en poids de sucre ajouté.

5. Mélange de confiserie congelé selon une quelconque des revendications précédentes, dans lequel les fibres non digestibles sont de la dextrine résistante.

6. Mélange de confiserie congelé selon une quelconque des revendications précédentes comprenant
4 à 8 % en poids de matière grasse, de préférence 4,5 % à 6,5 % en poids de matière grasse, et dans lequel la matière grasse comprend de l'huile de coco.

7. Mélange de confiserie congelé selon une quelconque des revendications 1 à 5, le mélange de confiserie congelé comprenant
de 5 à moins de 8,5 % en poids de matière grasse, de préférence 5,5 à 8,1 % en poids de matière grasse, et dans lequel la matière grasse est constituée de matière grasse laitière.

8. Mélange de confiserie congelé selon une quelconque des revendications 1 à 5, le mélange de confiserie congelé comprenant
4 à 8 % en poids de matière grasse, de préférence 4,5 à 6,5 % en poids de matière grasse, et dans lequel le mélange de matières grasses comprend de la graisse de coco et des huiles de palme.

9. Mélange de confiserie congelé selon une quelconque des revendications 1 à 8, le mélange de confiserie congelé ne contenant pas d'édulcorants puissants artificiels ou naturels, ni de fructose ajouté ou de sirop de maïs à haute teneur en fructose.

10. Mélange de confiserie congelé selon une quelconque des revendications 1 à 9, le mélange de confiserie congelé ne contenant pas de polyols ou d'alcool glucidique, par exemple le glycérol, le maltitol, le xylitol, le sorbitol.

11. Mélange de confiserie congelé selon une quelconque des revendications 1 à 10, le mélange de confiserie congelé contenant moins de 0,6 g d'émulsifiant et de stabilisant, pour 100 g de mélange.

12. Procédé de fabrication d'un mélange de confiserie congelé, le procédé comprenant les étapes suivantes :
fourniture d'un mélange de confiserie congelé selon une quelconque des revendications 1 à 11,
mélangeage du mélange, traitement du mélange par la chaleur pour détruire les pathogènes,
homogénéisation du mélange pour désintégrer et stabiliser les globules gras,
éventuellement aromatisation du mélange pour adapter le goût, et
refroidissement du mélange pour permettre une maturation et une coalescence partielle des globules gras.

13. Confiserie congelée comprenant un mélange de confiserie congelé selon une quelconque des revendications 1 à 11.
